(19) Europäisches Patentamt
European Patent Office
Office européen des brevets

(11) **EP 2 681 095 B1**

(12) **EUROPÄISCHE PATENTSCHRIFT**

(45) Veröffentlichungstag und Bekanntmachung des
Hinweises auf die Patenterteilung:
**28.11.2018   Patentblatt 2018/48**

(21) Anmeldenummer: **12707293.2**

(22) Anmeldetag: **02.03.2012**

(51) Int Cl.:
***B62D 25/20*** *(2006.01)*

(86) Internationale Anmeldenummer:
**PCT/EP2012/053628**

(87) Internationale Veröffentlichungsnummer:
**WO 2012/117093 (07.09.2012 Gazette 2012/36)**

(54) **BAUTEIL FÜR SCHIENENFAHRZEUGE**

COMPONENT FOR RAIL VEHICLES

PIÈCE STRUCTURALE POUR VÉHICULES FERROVIAIRES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **02.03.2011   DE 102011004984**

(43) Veröffentlichungstag der Anmeldung:
**08.01.2014   Patentblatt 2014/02**

(73) Patentinhaber: **Bombardier Transportation GmbH
10785 Berlin (DE)**

(72) Erfinder:
• **LINDNER, Jens
01309 Dresden (DE)**

• **SCHNEIDER, Sven
02627 Weißenberg OT Kotitz (DE)**

(74) Vertreter: **Patentanwälte Bressel und Partner mbB
Potsdamer Platz 10
10785 Berlin (DE)**

(56) Entgegenhaltungen:
EP-A1- 0 672 567      EP-A1- 0 785 121
EP-A2- 0 818 373      DE-A1- 10 042 560
FR-A1- 2 866 623      GB-A- 2 159 105
US-A- 5 433 151

**Beschreibung**

Die Erfindung betrifft ein Bauteil für Schienenfahrzeuge, das ein Element in Sandwichbauweise aufweist, und ein Schienenfahrzeug, das ein solches Bauteil aufweist.

Beim Bau von Schienenfahrzeugen, insbesondere bei der Konstruktion von Wagenkarosserien, werden Bauteile mit Schichtstruktur eingesetzt, die aus einer inneren Platte, einer äußeren Platte aus Metall und einem zwischen den Platten angeordneten Metallkern mit Zellstruktur bestehen. Die Zellstruktur ist in der Regel bienenwabenförmig aus hexagonalen Zellen aufgebaut. Das Vorhandensein solcher Bauteile, insbesondere bienenwabenförmiger Platten, ermöglicht es, eine leichtere Karosserie zu erhalten als mit massiven, aus Metall bestehenden Platten. Gleichzeitig weisen Schichtstrukturen die gewünschte Steifigkeit auf. Die EP 0354436, EP 0405889 und EP 0544498 beschreiben Karosserien für Schienenfahrzeuge, die solche Bauteile aufweisen.

Der Nachteil der Sandwich-Bauteile bei Schienenfahrzeugen aus dem Stand der Technik ist ein relativ hohes Gewicht.

EP 2266784 beschreibt ein Verfahren zur Herstellung von Verbundkomponenten mit einem Bienenwabenkern, bei dem man eine Preform mit einer dreidimensional gekrümmten Form herstellt, die Preform imprägniert, die Preform mit dem Bienenwabenkern zusammenbringt und die Preform und den Bienenwabenkern gemeinsam aushärtet. Die Deckschichten eines Wabenkerns werden als Preform hergestellt. Von den Deckschichten des Verbundteils ist eine flach und eine andere gekrümmt. Der Wabenkern hat eine flache Oberfläche und eine gekrümmte Oberfläche. Die Wände des Wabenkerns sind zueinander parallel, wie in der Fig. 1 der EP 2266784 zu sehen. Die Krümmung der einen Oberfläche des Wabenkerns wird durch eine veränderte Länge der Wände des Wabenkerns erzielt. Dadurch, dass eine der Deckschichten und einer der Oberflächen des Wabenkerns nicht gekrümmt sind, ist das in EP 2266784 offenbarte Verbundteil insgesamt nicht gebogen.

DE 19843969 A1 betrifft ein Verfahren zum Herstellen eines kastenförmigen Kofferaufbaus für Transportfahrzeuge. Bei dem Verfahren wird ein aus thermoplastischem Material bestehendes, mehrschichtiges, einen Stützkern und Deckschichten aufweisendes Flachteil erwärmt und abgekantet. Zuvor werden mehrere Sandwichplatten schmalseitig aneinanderstossend zu dem Flachteil thermoplastisch unter Druck- und Wärmeeinfluss miteinander verbunden. Dabei entstehen Schweißnähte.

FR 2 866 623 A1 beschreibt ein Fußbodenteil für ein Fahrzeug, das zusammen gefügte gebogene Sandwich-Bauteile aufweist.

GB 2 159 105 A zeigt das gebogene Dach eines Busses, das aus einer Sandwichstruktur bestehen kann.

DE 100 42 560 A1 zeigt ein Deformationsformteil, das eine Gitter- oder Wabenstruktur aufweist und aus einem Kunststoffmaterial hergestellt sein kann.

Die Aufgabe der Erfindung bestand darin, ein verbessertes Sandwich Bauteil für Schienenfahrzeuge bereitzustellen.

Als Lösung wird ein Bauteil nach Anspruch 1 vorgeschlagen. Die Unteransprüche betreffen besonders vorteilhafte Ausführungsformen eines solchen Bauteils.

Die Erfindung betrifft ein Bauteil für Schienenfahrzeuge, aufweisend oder bestehend aus einem Element in Sandwichbauweise, das aus zwei Deckschichten und einer zwischen den Deckschichten angeordneten Kernschicht aus Wänden und von den Wänden umgrenzten Zellen aufgebaut ist, wobei die Deckschichten und die Wände der Kernschicht jeweils aus einem Kunststoff oder einem Kunststoffverbund bestehen, und wobei das Element in Sandwichbauweise um mindestens zwei Achsen gebogen ist und mindestens zwei dieser Achsen sich in einem Schnittpunkt schneiden,
und wobei die Deckschichten beide durchgängig und gebogen sind und die Deckschichten keine Naht und/oder Fuge aufweisen.

Die Kernschicht weist ebenfalls zwei gebogene Oberflächen auf, die an die gebogenen Deckschichten angrenzen. Vorzugsweise sind die Wände der Kernschicht in einem nicht gebogenen Bereich des Elements zueinander parallel oder im Wesentlichen zueinander parallel. In einem gebogenen Bereich des Elements sind die Wände der Kernschicht nicht zueinander parallel. Es wird aber auch eine Ausführungsform angegeben, in der die Wände der Kernschicht in einem nicht gebogenen Bereich zueinander parallel sind und die Wände der Kernschicht in einem gebogenen Bereich ebenfalls zueinander parallel sind.

Vorzugsweise hat die Kernschicht eine Wabenform, d.h. sie ist aus regelmäßigen sechseckigen Zellen aufgebaut. Die Kernschicht ist vorzugsweise aus mehreren Elementen zusammengesetzt. Dadurch wird die Steifigkeit der Kernschicht reduziert und die Herstellung die gebogene Struktur des Elements leichter ermöglicht. Jedes Element der Kernschicht kann eine Struktur aus Wänden und von den Wänden umgrenzten Zellen aufweisen, insbesondere eine Bienenwabenstruktur.

Die Wände der Kernschicht grenzen an die beiden Deckschichten an. Sie erstrecken sich zwischen den Deckschichten, von einer Deckschicht zur anderen Deckschicht.

Der Begriff "Kunststoff" umfasst sowohl einen reinen Kunststoff als auch ein Gemisch (Blending) aus Kunststoffen. Der Begriff "Kunststoffverbund" bezeichnet einen Verbundwerkstoff, der als eine Komponente einen Kunststoff enthält. In dem Kunststoffverbund können Komponenten aus einem Nicht-Kunststoff, enthalten sein, wie nachfolgend noch beschrieben, z.B. Nicht-Kunststoff-Fasern. Der Begriff "Kunststoff", auch bezeichnet als "organisches Polymer", bezeichnet einen Festkörper, dessen Grundbestandteil synthetisch oder halbsynthetisch aus monomeren oder prepolymeren organischen Molekülen hergestellt wird.

Die Erfindung betrifft ein Bauteil, das mehrfach gebogen oder gewinkelt ist, insbesondere entlang mehrerer nicht zueinander paralleler Achsen.

Mit einem solchen Bauteil kann gegenüber dem Stand der Technik eine Massereduzierung von 30 bis 50% erzielt werden bzw. eine Massereduzierung von ca. 3 bis 5 kg/m$^2$ Fläche. Das erfindungsgemäße Bauteil hat eine hohe mechanische Steifigkeit bei vergleichsweise geringem Gewicht.

Das Element in Sandwichbauweise wird nachfolgend auch als "Element" bezeichnet. Das Bauteil für Schienenfahrzeuge kann ein solches Element aufweisen, vorzugsweise als Hauptkomponente, oder auch gänzlich daraus bestehen.

Es ist möglich, aus einem solchen Element Bauteile mit komplexer Geometrie in einem Stück zu formen, insbesondere Bauteile, die um mehrere nicht zueinander parallele Achsen gebogen sind. Ein Verfahren dazu sowie spezielle Bauteile werden später angegeben.

In einer speziellen Ausführungsform wird ein Bauteil angegeben, bei dem mindestens zwei der Achsen nicht rechtwinklig zueinander stehen.

Insbesondere weist das Bauteil mindestens drei Achsen auf, die sich in einem Punkt schneiden. In einer bevorzugten Variante des Bauteils liegt der Schnittpunkt der Achsen innerhalb des von den Außenrändern umgrenzten Bereichs des Bauteils. Dies bedeutet, dass der Schnittpunkt der Achsen über einer der Deckschichten, auf einer der Deckschichten, innerhalb einer der Deckschichten oder zwischen den Deckschichten liegt, der Schnittpunkt nicht auf dem Außenrand des Bauteils oder jenseits des Randes des Außenrands liegt. Weitere Achsen können vorhanden sein, die mit den genannten Achsen schneiden oder nicht. Der von den Außenrändern umgrenzte Bereich weist durchgängige, naht- und/oder fugenlose Deckschichten auf.

Ein weiterer Vorteil der Erfindung ist, dass durch die Möglichkeit der komplexen Formgebung komplexe dreidimensionale Bauteil-Geometrien in einem Stück gefertigt werden können. Damit ist gemeint, dass das Bauteil nicht aus mehreren Elementen in Sandwichbauweise zusammengesetzt ist, sondern dass das Bauteil mit oder aus nur einem Element mit einer durchgängigen Sandwichstruktur gefertigt ist. Mit einer durchgängigen Sandwich-Struktur ist eine Sandwich-Struktur mit durchgängigen Deckschichten gemeint. Der Begriff "durchgängig" bedeutet auch "nahtlos" oder "fugenlos". Durch diese Bauweise sind innerhalb des Bauteils, insbesondere innerhalb der Deckschichten, keine Fugen oder Nähte erforderlich, die bisher durch das Zusammenfügen mehrerer Einzelelemente zu komplexen Bauteilen auftraten. Dadurch wird auch ein Stabilitätsgewinn erzielt. Zum anderen sind vorgeformte, fugenlose Bauteile universell einsetzbar und die Fertigung komplexer Bauteile ist weniger aufwändig, da nicht mehrere Elemente zusammengesetzt werden müssen.

Die Deckschichten des Bauteils haben vorzugsweise eine konstante Dicke. Anders ausgedrückt ist die Wandstärke der Deckschichten konstant. Insbesondere weisen nahtlose und fugenlose Deckschichten bei dem erfindungsgemäßen Bauteil keine Verdickungsstellen oder Verdünnungsstellen auf, die bei einem Zusammenfügen mehrerer Deckschichten zu einer großflächigeren Deckschicht an Verbindungsstellen zwischen Deckschichten entstehen - an Verbindungsstellen wo Kanten von Deckschichten aneinanderstoßen. Insbesondere sind keine lokalen Verdickungsstellen oder Verdünnungsstellen vorhanden, beispielsweise in Form von Schweißnähten wie bei DE 19843969 A1 in Fig. 6.

Die zwischen den Deckschichten liegende Kernschicht kann aus mehreren Einzelelementen zusammengesetzt sein.

Es ist nicht möglich, aus bekannten Sandwich-Metallplatten komplex gebogene Bauteile, wie zuvor beschrieben, herzustellen. Im Allgemeinen ist daraus nur ein Bauteil herstellbar, das nur um eine Achse verformt oder gewinkelt ist.

Gegenüber Holzbauteilen entfällt bei dem erfindungsgemäßen Bauteil auch die Notwendigkeit einer allseitigen Oberflächenversiegelung, die bei Holz zum Schutz vor eindringenden Medien erforderlich ist.

Schließlich weist das Bauteil gegenüber den aus dem Stand der Technik bekannten Sandwichstrukturen aus Metall auch einen geringeren Wärmedurchgangskoeffizienten auf und eignet sich daher besser zur thermischen Isolation des Innenraums von Schienenfahrzeugen und Wagenkästen, insbesondere von Fußböden.

Nicht beschränkende Beispiele für Kunststoffe bzw. Werkstoffe für das Element in Sandwichbauweise sind Duroplasten oder Thermoplasten wie Polymere aus Polyethylen, Polypropylen, Polyurethan, Polyester, Polycarbonat, Polyvinylchlorid, Polyamid, Phenol, Melamin und oder Mischungen davon, welche formlos, formgebend oder formgegeben zur Herstellung der Verbundplatten verwendet werden können, sowie Verbunde mit spezifischen Verstärkungsmaterialien beispielhaft aus Glas, Kevlar, Aramid u.a. Weitere geeignete Kunststoffe sind offenbart in der US 20060240242.

Ein besonders geeigneter Kunststoffverbund ist ein faserverstärkter Kunststoff. Somit sind in einer speziellen Ausführungsform der Erfindung die Deckschichten und/oder die Wände der Kernschicht aus einem faserverstärkten Kunststoff. Als Kunststoff sind die bereits oben genannten Kunststoffe einsetzbar. Insbesondere geeignet sind Kunststoffe, die als Verbund mit Verstärkungsfasern oder faserförmigen Verstärkungsmaterialien geeignet sind, und die in einem formgebenden Fertigungsverfahren verarbeitet werden können. Insbesondere geeignet sind glasfaserverstärkter Kunststoff (GFK), Karbonfaserkunststoff (CFK), Synthesefaser-verstärkter Kunststoff (SFK). Als Fasern können z.B. Aramidfasern, Carbon Nanotubes (CNT), anorganische Fasern, Metallfasern, metallisierte Synthesefasern, metallisierte anorganische Fasern, Zellulosefasern und Mischungen davon eingesetzt werden. Der Kunststoff bildet die polymere Matrix, in welche die Fasern eingelagert sind. Der Kunststoff bzw. Werkstoff der Deckschichten ist vorzugsweise ein Verbundwerkstoff mit vergleichsweise hoher Festigkeit und hoher Steifigkeit.

Besonders bevorzugt bestehen bei dem erfindungsgemäßen Bauteil die Deckschichten des Elements aus glasfaserverstärktem Phenolharz.

Der Faseranteil an einem faserverstärkten Kunststoff beträgt vorzugsweise 40 - 60 Gewichtsprozent, insbesondere bei einem glasfaserverstärkten Kunststoff.

Ein besonders geeigneter Bestandteil für die Kernschicht ist Aramid, insbesondere sogenanntes Nomex®, sowie Kevlar®, Aramidmaterialien der Firma Dupont.
Alle genannten Kunststoffe und Kunststoffverbünde weisen vorzugsweise Brandschutzzusätze auf.

Das erfindungsgemäße Bauteil ist vorzugsweise so ausgestaltet, dass es eine oder mehrere der Brandschutznormen EN 45545 2N, NF F 16-101 oder DIN 5510 BS einhält.

Die Wände der Kernschicht weisen vorzugsweise Aramidfasern auf. In einer vorteilhaften Ausführungsform bestehen die Wände der Kernschicht aus Phenolharz und darin eingebetteten Aramidfasern. Ein weiteres besonders geeignetes Material ist Aramidpapier. Aramidpapier kann ohne Klebstoff und Bindemittel bei hohen Drücken und Temperaturen aus Aramidfasern zusammen gepresst werden. Noch mehr bevorzugt ist ein Aramidpapier, das mit Phenolharz oder Epoxidharz getränkt ist. Einsetzbar sind ferner auch Gewebe aus Aramidfasern. Für die Erfindung besonders geeignet sind Produkte, die unter den Markennamen oder Trivialnamen "Nomex®-Papier", "Honeycomb Cores", "Nomex Polyamide Paper (meta-aramid)" oder "Phenolic Resin Impregnated Hexagonal" vertrieben werden.

Die Kernschicht kann aus Zellen beliebiger Geometrie aufgebaut sein, wobei die Zellwände aus den oben erwähnten Kunststoffmaterialien aufgebaut sind. In einer bevorzugten Ausführungsform ist die Zellstruktur eine Struktur aus hexagonalen Zellen, auch bezeichnet als Bienenwaben oder Honeycomb-Struktur. Der Zellenweite kann beliebig gewählt werden und liegt vorzugsweise im Bereich von 3,2 bis 6,4 mm.

Grundsätzlich können die Zellen der Kernschicht beispielsweise auch mit einem offenporigen oder geschlossenporigen Schaum gefüllt sein, beispielsweise mit Phenol- oder PU-Schaum, oder einem anderen Isolationsmaterial mit geringer Dichte.

Erfindungsgemäße spezielle Bauteile für Schienenfahrzeuge sind beispielsweise Verkleidungsteile oder Strukturteile. Ein Strukturteil hat im Gegensatz zu einem Verkleidungsteil tragende Eigenschaften. Spezielle Beispiele für Bauteile sind Seitenwände, Decken, Ablagen, Trennwände für Innenräume und Fußbodenteile. Besonders bevorzugt ist das Bauteil ein Fußbodenteil. Ein solches erfindungsgemäßes Fußbodenteil hat den Vorzug einer großen thermischen Isolationsfähigkeit und eines geringen Wärmedurchgangskoeffizienten, wenn man als Vergleich beispielsweise ein gleich dimensioniertes Bauteil aus einem Metallsandwich oder Sperrholz heranzieht. Die Isolationsfähigkeit ist beim Einsatz für Fußböden in Schienenfahrzeugen sehr erwünscht. Je nach gewählten Material und Dicke des Bauteils können zusätzliche Dämmschichten, die bei Fußböden aus dem Stand der Technik eingesetzt werden, entfallen.

Das Bauteil, und das Element in Sandwichbauweise, sind um mindestens zwei Achsen (auch bezeichnet als Biegeachsen) gebogen und weist eine Sandwich-Struktur mit durchgängigen Deckschichten auf. Die Biegung ist derart, dass sowohl die Deckschichten als auch die Kernschichten gebogen sind.

Die Deckschichten sind formgebend, d.h. die Form des Bauteils wird durch die Form der Deckschichten, insbesondere deren Biegung, bestimmt. Vorzugsweise ist das Bauteil um mindestens zwei Achsen gebogen, die nicht zueinander parallel sind. Insbesondere weist das Bauteil mindestens drei Achsen auf, die nicht zueinander parallel sind. Besonders bevorzugt weist das Bauteil keinerlei zueinander parallele Achsen auf.

Statt des Begriffes "gebogen" können auch die Begriffe "gekrümmt", "gewinkelt" oder "abgewinkelt" verwendet werden, um das Bauteil zu beschreiben. Das Bauteil ist um mindestens zwei Achsen, anders ausgedrückt: entlang mindestens zwei Achsen, gewinkelt. Vorzugsweise ist das Bauteil um bzw. entlang mindestens zwei Achsen gewinkelt, die nicht zueinander parallel sind.

Das Bauteil weist beispielsweise Flächen auf, die zueinander (ab)gewinkelt sind. Die Flächen sind vorzugsweise eben. Im Übergangsbereich zwischen den Flächen ist die Sandwichstruktur vorzugsweise gekrümmt. Im gekrümmten Bereich sind beide Deckschichten gekrümmt. Die Wände der Kernschicht des Elements in Sandwichbauweise sind in nicht gekrümmten Bereichen vorzugsweise zueinander parallel. In gekrümmten Bereichen sind die Wände der Kernschicht nicht zueinander parallel. Die sich zwischen den Deckschichten erstreckenden Wände der Kernschicht fächern in einem gekrümmten Bereich auf, betrachtet in einer Querschnittansicht durch den gekrümmten Bereich.

Angegeben wird auch ein Bauteil, das mindestens drei Flächen aufweist, die beliebig zueinander gewinkelt sind. Insbesondere wird ein Bauteil angegeben, das mindestens drei Flächen aufweist, die zueinander (ab)gewinkelt sind, wobei die Winkel zwischen den Flächen ungleich 90° sind. Anders ausgedrückt stehen die mindestens drei Flächen nicht rechtwinklig zueinander. Die Flächen können beliebige Form haben wobei sie von gekrümmten Bereichen und gegebenenfalls von einem Außenrand des Bauteils begrenzt sind. In einer speziellen Variante weist das Bauteil dreieckige Flächen auf. Dreieckige Flächen können dadurch gebildet sein, dass das das Bauteil zwei Biegeachsen aufweist, die spitzwinklig zueinander stehen und sich in einem Punkt schneiden. Einer der Ränder des Dreiecks kann ein Außenrand sein. Eine Dreiecksfläche kann auch von drei gekrümmten Bereichen umgrenzt sein, an denen entlang Biegeachsen verlaufen.

Angegeben wird auch ein Bauteil mit drei Biegeachsen, die nicht in einer gemeinsamen Raumebene verlaufen. Neben den drei Biegeachsen können weitere Biegeachsen vorhanden sein. Dadurch wird ein Bauteil mit sich dreidimensional erstreckenden Biegeachsen erhalten, auch bezeichnet als "dreidimensional gekrümmtes Bauteil

Verschiedenste Krümmungsradien sind möglich. Die möglichen Krümmungsradien sind unter anderem von den eingesetzten Materialen und der Dimensionierung der Deckschichten und der Kernschichten abhängig. Anders ausgedrückt offenbart die Erfindung ein Bauteil, das mehrere Krümmungsbereiche aufweist. Das Teil kann auf jede beliebige Art und zu jeder beliebigen Kontur gekrümmt sein, beispielsweise in einer Bogenform.

Die Erfindung betrifft insbesondere ein Fußbodenteil, das wie oben beschrieben gebogen oder abgewinkelt ist. Wie bereits zuvor erwähnt, lassen sich derart gebogene Bauteile aus den bisher für Schienenfahrzeuge bekannten Metall-Sandwichplatten nicht formen. Dies ist beispielsweise nachteilig bei der Herstellung von Einstiegsrampen. Demgemäß betrifft die vorliegende Erfindung ganz speziell auch ein Fußbodenteil für ein Schienenfahrzeug mit einstückig geformten Einstiegsrampen oder Rampenkonturen im Fahrzeug.

Weiterhin zeichnet sich das Bauteil vorzugsweise durch die in den nachfolgenden Absätzen genannten Merkmale aus, die einzeln oder in beliebiger sinnvoller Kombination verwirklicht sein können. Mit diesen Merkmalen lassen sich vorteilhafte Eigenschaften des Bauteils hinsichtlich Schalldämmung, Langzeitstabilität, Belastbarkeit und Gewicht erzielen.

Die Deckschichten weisen vorzugsweise jeweils eine flächenbezogene Masse von 2400 g/m$^2$ bis 3100 g/m$^2$ auf.

Die Kernschicht weist vorzugsweise eine volumenbezogene Masse von 48 bis 92 kg/m$^3$ auf.

Die Dicke des Elements in Sandwichbauweise des Bauteils beträgt vorzugsweise 15-25 mm.

Die Dicke der Deckschichten beträgt vorzugsweise 1 bis 2 mm.

Die flächenbezogene Masse des Elements in Sandwichbauweise des Bauteils beträgt vorzugsweise 6000 bis 8000 g/m$^2$, wobei hier das gesamte Element in Sandwichbauweise und nicht nur eine seiner Einzelkomponenten, wie Deckschichten oder Kernschicht, gemeint ist.

Das Element in Sandwichbauweise des Bauteils weist vorzugsweise eine Durchbiegung von maximal 1/300 bei einer Belastung von 5,75 kN/m$^2$ auf. Diese Durchbiegung gilt insbesondere bei statischer Belastung.

Das Element in Sandwichbauweise des Bauteils weist vorzugsweise eine Durchbiegung von maximal 1/200 bei einer Belastung von 6,70 kN/m$^2$ auf. Diese Durchbiegung gilt insbesondere bei dynamischer Belastung.

Die Durchbiegung (D) ist im Sinne dieser Erfindung definiert als:

$$D = \text{maximale Auslenkung des Elements} / \text{freie Länge des Elements zwischen zwei Auflagepunkten}$$

Die maximale Auslenkung wird wie die freie Länge in einer Längeneinheit gemessen, so dass die Durchbiegung D dimensionslos ist.

Die freie Länge zwischen zwei Auflagepunkten wird auch als "freie Biegelänge" bezeichnet. Die Auslenkung, auch bezeichnet als "maximale Biegestrecke" oder "maximale Biegung", wird vertikal zur freien Länge des Elements zwischen den Auflagepunkten gemessen. Beispiel: Ein gerader Stab ist horizontal zwischen zwei Punkten eingespannt. Die Punkte sind 100 mm beabstandet und der Stab wird an einer Stelle zwischen den zwei Punkten um 5 mm nach unten (oder nach oben) ausgelenkt. Dann beträgt die Durchbiegung 5/100.

Die Schalldämmung des Bauteils beträgt vorzugsweise mindestens 30 Dezibel.

Die Erfindung betrifft neben dem zuvor beschriebenen Bauteil auch ein Schienenfahrzeug, das ein solches Bauteil aufweist, sowie die Verwendung eines Elements in Sandwichbauweise, das aus Deckschichten und einer zwischen den Deckschichten befindlichen Kernschicht aus Wänden und davon umgrenzten Zellen aufgebaut ist, und bei dem die Deckschichten und die Kernschicht aus einem Kunststoff sind, als Bauteil für Schienenfahrzeuge oder zur Herstellung von Bauteilen für Schienenfahrzeuge. Hierbei wird ausdrücklich auf die oben ausgeführte Offenbarung zu Bauteilen und Elementen in Sandwichbauweise Bezug genommen. Das Element ist insbesondere eine Platte, aus der ein Bauteil für Schienenfahrzeuge hergestellt wird, besonders bevorzugt ein Bauteil, das um mehrere nicht zueinander parallele Achsen gebogen oder abgewinkelt ist (nachfolgend auch als komplexes Bauteil bezeichnet). Bauteile gemäß der Erfindung sind aus den beschriebenen Elementen in Sandwichbauweise herstellbar, indem man das Element bereits in der endgültigen Form fertigt.

Ein Bauteil, insbesondere ein komplexes Bauteil, wie zuvor beschrieben, ist mit einem Verfahren herstellbar, das die folgenden Schritte umfasst:

a) Einlegen von Material für die erste Deckschicht in eine Negativform des Bauteils,
b) Auflegen einer Kernschicht, aufweisend Wände und davon umschlossene Zellen, auf das Material für die erste Deckschicht,
c) Auflegen von Material für die zweite Deckschicht auf die Kernschicht,
d) Zufuhr von Wärme und Druck zur Aushärtung der Einzelbestandteile des Verbundes aus den Deckschichten und der Kernschicht zu einer Sandwichstruktur.

Die Negativform des Bauteils weist die erwünschte endgültige Form auf, insbesondere eine komplexe Form. Das Material der ersten Deckschicht wird in Schritt a) in nicht ausgehärtetem Zustand in die Form eingebracht und die Wand der Form damit gleichmäßig bedeckt.

Das Material für Schritt a) umfasst vorzugsweise einen Kunststoff und Fasern zur Herstellung eines Kunststoffverbundes. Im Fall eines Duroplasten-Kunststoffes wird dieser im nicht gehärteten Zustand in die Form eingebracht.

Besonders geeignete Materialien für die Deckschicht und/oder die Kernschicht sind sogenannte "Prepregs". Prepreg ist eine Abkürzung für "Preimpregnated fibers" (vorimprägnierte Fasern). Ein Prepreg umfasst Faser, insbesondere Endlosfasern, und eine ungehärtete duroplastischen Kunststoffmatrix. Im Fall von Endlosfasern können die Endlosfasern als reine unidirektionale Schicht, als Gewebe oder Gelege vorliegen. In den Schritten a) und c) des Verfahrens können mehrere Prepreg-Schichten übereinander gelegt werden, um eine Deckschicht zu bilden. Dies bietet sich insbesondere in Bereichen an, die besonders verstärkt sein sollen, wie z.B. gewinkelte und gekrümmte Bereiche. Im letzten Schritt des Verfahrens wird die ungehärtete duroplastische Kunststoffmatrix des Prepreg gehärtet. Durch die Zufuhr von Wärme werden die Kunststoffe der Deckschichten und der Kernschichten miteinander verklebt.

Als optionaler Schritt können Zellen der Kernschicht, die am Rand der Form angeordnet sind, vor dem Schritt c) mit einer Füllmasse gefüllt werden, vorzugsweise mit einem Kunstharz, insbesondere Epoxidharz. Dieses Harz härtet im letzten Schritt des Verfahrens aus. Am Rand der Form befindet sich der Rand des herzustellenden Bauteils und die Befüllung mit Füllmasse bewirkt eine Verstärkung der Ränder und ein Verschließen dort angeordneter Zellen der Kernschicht. Vorzugsweise werden soviele Zellen gefüllt, dass ein Bereich von ca. 2 cm, ausgehend vom Rand der Form gefüllt wird. Dadurch erhält man einen Spielraum für eine weitere Bearbeitung des Randes des Bauteils, z.B. durch Sägen oder Schleifen, ohne dass der Verschluss am Rand wieder entfernt wird. Falls erwünscht, können die Zellen oder ein Teil der Zellen auch mit einem wärmeisolierenden Füllstoff oder einem Kunststoffschaum gefüllt werden.

Nach Durchführung des Schrittes b) ist, falls erforderlich, ein mechanisches Nacharbeiten der Kernschicht, beispielsweise durch Fräsen oder Schleifen, möglich.

In Schritt d) erfolgen die Aushärtung der Materialien und die Verbindung der Schichten zu einer Sandwichstruktur in einem Fertigungsgang. Der Druck in Schritt d) wird vorzugsweise durch Anlegen eines Vakuums oder Anpressen einer Gegenform ausgeübt. Das Anlegen eines Vakuums kann erfolgen, indem man die gesamte Bauteilform mit einer luftdichten Hülle umschließt und anschließend Luft absaugt und einen möglichst hohen Unterdruck erzeugt. Dabei werden alle von der Hülle umschlossenen Teile vom Umgebungsdruck zusammengepresst. Die Temperaturzufuhr kann durch eine beheizte Form erfolgen oder indem man das Verfahren in einer beheizten Umgebung, beispielsweise in einem Autoklav, durchführt.

Bei komplexen Bauteilen liegen mitunter verschiedene Krümmungsradien bei den beiden Deckschichten vor, was bei der Dimensionierung der Deckschichten vor dem Formungsprozess zu beachten ist.

Ein Bauteil, insbesondere ein komplexes Bauteil, ist auch mit einem Verfahren herstellbar, das die folgenden Schritte umfasst:

a) Einlegen von Material für die erste Deckschicht in eine Negativform des Bauteils,
b) Kleben einer Kernschicht, aufweisend Wände und davon umschlossene Zellen, auf die erste Deckschicht
c) Kleben einer zweiten Deckschicht auf die Kernschicht.

Im Unterschied zum zuvor beschriebenen Verfahren wird in diesem Verfahren ein zusätzlicher Klebstoff verwendet, um die Deckschichten und die Kernschichten miteinander zu verbinden.

Die Negativform des Bauteils weist die erwünschte endgültige Form auf, insbesondere eine komplexe Form. Das Material der ersten Deckschicht wird in Schritt a) in nicht ausgehärtetem Zustand in die Form eingebracht und die Wand der Form damit gleichmäßig bedeckt. Im Fall einer sehr dünnen ersten Deckschicht kann man das Material in einem Zwischenschritt vollständig aushärten lassen, bevor eine Kernschicht mit Zellstruktur aufgeklebt wird, damit sich die Zellstruktur später nicht auf der Bauteilaußenseite abzeichnet. Die Verklebung erfolgt vorzugsweise mit sehr dünnflüssigem Laminierharz, das mit einer Walze auf die laminierte erste Deckschicht aufgebracht werden kann. Für eine sehr feste Verklebung kann es vorteilhaft sein, die erste Deckschicht zuvor anzuschleifen. In Schritt b) wird die Kernschicht auf die mit Klebstoff behandelte erste Deckschicht aufgebracht. Alternativ kann der Klebstoff auch auf die Kernschicht aufgebracht werden. Beim Kleben der Kernschicht wird diese vorzugsweise fest auf die erste Deckschicht, die in die Form laminiert wurde, gepresst. Dieses geschieht vorzugsweise durch Anlegen eines Vakuums, aber auch ein Verpressen mit einer Gegenform ist möglich. Nach Durchführung des Schrittes b) ist, falls erforderlich, ein mechanisches Nacharbeiten der Kernschicht, beispielsweise durch Fräsen oder Schleifen, möglich. Falls erwünscht, können die Zellen oder ein Teil der Zellen gefüllt werden, beispielsweise mit einem wärmeisolierenden Füllstoff oder einem Kunststoffschaum oder Kernfüllmasse, wie oben beschrieben. Im letzten Schritt c) wird die zweite Deckschicht auf die Kernschicht geklebt, vorzugsweise mit einem Laminierharz. Vorzugsweise wird das Laminierharz auf die zweite Deckschicht und nicht auf die Kernschicht aufgebracht, denn so wird verhindert, dass die Zellen der Kernschicht mit Harz volllaufen. Der Schritt c) erfolgt vorzugsweise wiederum unter Druck, beispielsweise durch Anlegen eines Vakuums oder Anpressen einer Gegenform. Das Anlegen eines Vakuums kann erfolgen, indem man die gesamte Bauteilform mit einer luftdichten Hülle umschließt und anschließend Luft absaugt und einen möglichst hohen Unterdruck erzeugt. Dabei werden alle von der Hülle umschlossenen Teile vom Umgebungsdruck zusammengepresst. Bei komplexen Bauteilen liegen mitunter verschiedene Krümmungsradien bei den beiden Deckschichten vor, was bei der Dimensionierung der Deckschichten vor dem Formungsprozess zu beachten ist.

Ein weiterer optionaler Verfahrensschritt umfasst die Zufuhr von Wärme und/oder Druck zur Aushärtung der Materialien für die Deckschichten und Verbindung der Schichten zu einer Sandwichstruktur, sofern die Aushärtung und Verbindung der Schichten nicht schon zuvor erfolgt ist.

Die Oberflächen des Bauteiles können in den angegebenen Verfahren durch Stauchen und/oder Strecken der Decklagen entstehen, ohne dass Nähte oder Fugen in den Deckschichten gebildet werden. Die Oberflächen des Bauteils entstehen nicht durch einfaches Falten bzw. Umkanten, wie dies bei DE 19843969 A1 der Fall ist.

Anregungen für weitere Verfahrensvarianten zur Herstellung erfindungsgemäßer Bauteile können der EP 2266784 entnommen werden.

Nachfolgend wird die Erfindung anhand spezieller Ausführungsformen beschrieben. Es zeigen:

Fig. 1    ein komplexes dreidimensionales Bauteil, das um mehrere nicht zueinander parallele Achsen gebogen ist,
Fig. 2    eine Querschnitts-Detailansicht des Bauteils nach Fig. 1, und
Fig. 3    eine Kernschicht des Bauteils nach Fig. 1 mit hexagonaler Zellstruktur in einer Ansicht von schräg oben
Fig. 4    einen gebogenen Bereich eines Bauteils

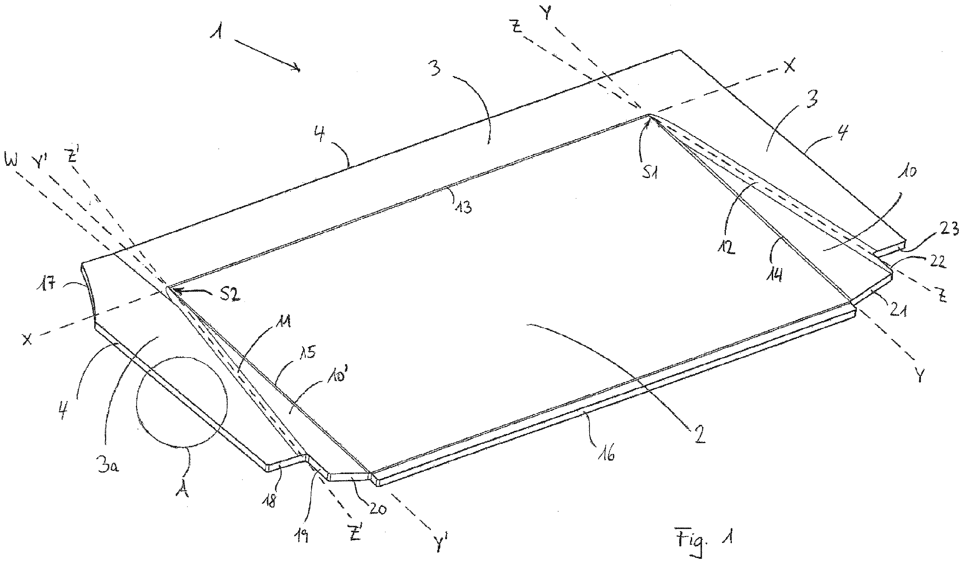

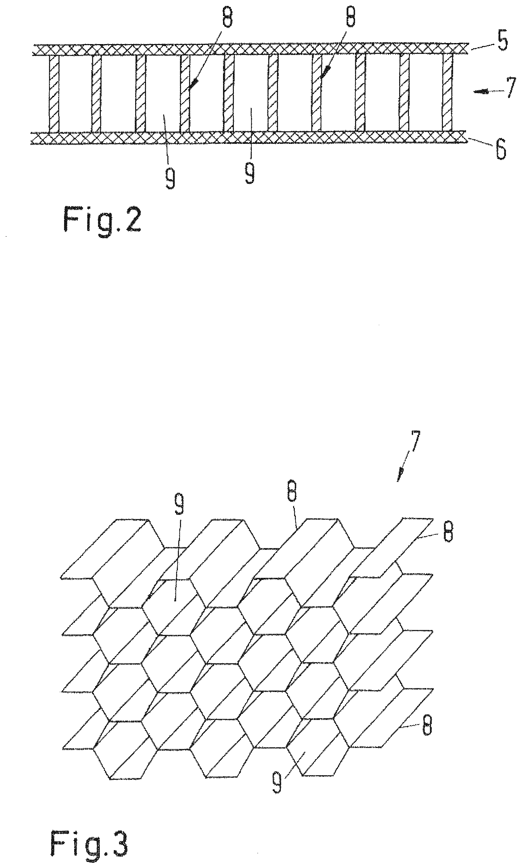

Das in Fig. 1 gezeigte Bauteil 1 ist ein Fußbodenteil für ein Schienenfahrzeug mit einer ausgeformten Einstiegsrampe 2. An die Rampe schließt sich eine im Wesentlichen horizontale und ebene Fußbodenfläche 3 an. Die Fläche 3a ist ebenfalls Teil des Fußbodens und entlang der Achse W zur Fläche 3 abgewinkelt. An die Rändern 4 können weitere Fußbodenelemente anschließen. Das Bauteil 1 weist im Querschnitt eine Sandwichstruktur aus zwei Deckschichten und einer zwischen den Deckschichten befindlichen Kernschicht mit Zellstruktur auf, wie nachfolgend in Fig. 2 gezeigt. Das Bauteil 1 ist aus einem einzigen Sandwich-Element gefertigt, d.h. es weist eine durchgängige, nahtlose Sandwichstruktur mit zwei durchgängigen, nahtlosen Deckschichten und einer durchgängigen Kernschicht auf. Die gezeichneten Linien z.B. zwischen den Flächen 3 und 3a sind keine Verbindungsnähte, sondern bedeuten eine Abwinkelung. Das Bauteil 1 ist um mehrere nicht zueinander parallele Achsen gebogen bzw. gewinkelt. Gezeigt sind, als Auswahl, die Achsen X, Y, Y', W, Z und Z'. Die Flächen 3a und 10' sind zueinander entlang der Achse Z' gewinkelt. Zwischen den Flächen 3a und 10' existiert ein gekrümmter Übergangsbereich 11. Die Flächen 3 und 10 sind entlang der Achse Z gewinkelt. Zwischen diesen Flächen existiert ein gekrümmter Übergangsbereich 12. Die Flächen 2 und 3 sind entlang der Achse X gewinkelt. Zwischen diesen Flächen existiert ein gekrümmter Übergangsbereich 13. Die Flächen 2 und 10 sind entlang der Achse Y gewinkelt. Zwischen diesen Flächen existiert ein gekrümmter Übergangsbereich 14. Die Flächen 2 und 10' sind entlang der Achse Y' gewinkelt. Zwischen diesen Flächen existiert ein gekrümmter Übergangsbereich 15. An der Fig. 1 lässt sich ein Vorteil des erfindungsgemäßen Bauteils verdeutlichen.

Bei dem Bauteil 1 stehen mehrere der Achsen nicht rechtwinklig zueinander, beispielsweise die Achsen X und Z, Y und Z, X und Z', Y' und Z'. Zudem schneiden sich mehrere der Achsen in einem Punkt: Die Achsen X, Y und Z schneiden sich in einem Punkt, und die Achsen X, Y' und Z' schneiden sich in einem Punkt. Die bezeichneten Schnittpunkte S1 und S2 liegen innerhalb des Bereichs, der von den Außenrändern des Bauteils umgrenzt ist, hier den Außenrändern 4, 16, 17, 18, 19, 20, 21, 22, 23. Die Achsen X, Y und Z verlaufen nicht in einer gemeinsamen Raumebene. Auch die Achsen X, Y' und Z' verlaufen nicht in einer gemeinsamen Raumebene.

Bei der Formung herkömmlicher Metall-Sandwichstrukturen zu einem analogen Bauteil könnte der Metall-Sandwich entlang der Achsen Y und Y' eingeschnitten und danach das Teil entlang der Achse X gebogen werden, um die Rampe 2 zu formen. Anschließend müssten die von den Achsen Y und Z bzw. Y' und Z' umgrenzten Bereiche 10 und 10' allerdings als separate Elemente eingesetzt und angefügt werden, was bei dem erfindungsgemäßen Bauteil nicht erforderlich ist, da es aus einem durchgehenden Sandwich-Element hergestellt ist.

In Fig. 2 ist der Ausschnitt A aus Fig. 1 vergrößert dargestellt. Zu sehen ist ein Schnitt durch das Bauteil 1 und seine Sandwich-Struktur aus zwei Deckschichten 5, 6 und einer Kernschicht 7 aus senkrecht zu den Deckschichten 5, 6 verlaufenden Wänden 8 und Zellen 9. Innerhalb der Kernschicht werden die Zellen 9 von den Wänden 8 umgrenzt, innerhalb der gesamten Sandwichstruktur werden die Zellen 9 von den Wänden 8 und den Deckschichten 5, 6 umgrenzt. Die Deckschichten 5, 6 und die Wände 8 bestehen aus einem Kunststoffverbund.

In Fig. 3 ist in einer Ansicht von schräg oben, durch eine der (nicht gezeigten) Deckschichten, ein Ausschnitt einer Kernschicht 7 gezeigt. Zu sehen sind die Wände 8 und eine Zellstruktur aus Zellen 9 mit hexagonaler Form (Bienenwabenstruktur).

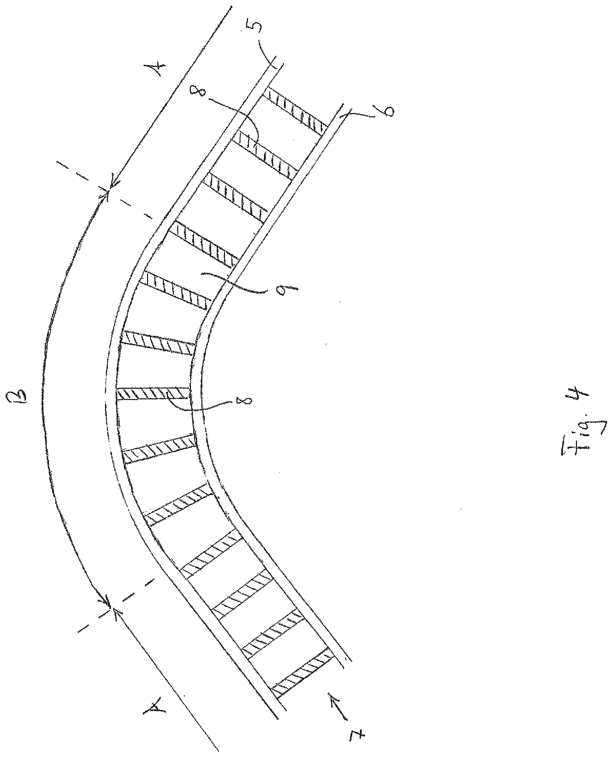

Fig. 4 zeigt einen gebogenen Bereich B eines Elements in Sandwichbauweise eines Bauteils, der zwischen zwei geraden Bereichen A angeordnet ist. Beide Deckschichten 5, 6 sind durchgängig, d.h. sie weisen weder im gebogenen Bereich B noch in sonstigen Bereichen ein Fuge oder Naht auf. Ferner sind beide Deckschichten 5, 6 gebogen. Im gebogenen Bereich B sind die Wände 8 der Kernschicht nicht zueinander parallel, wogegen sie in nicht gebogenen Bereichen A zueinander parallel sind.

**Patentansprüche**

1. Bauteil (1) für Schienenfahrzeuge, aufweisend ein Element in Sandwichbauweise, das aus zwei Deckschichten (5, 6) und einer zwischen den Deckschichten befindlichen Kernschicht (7) aus Wänden (8) und davon umgrenzten Zellen (9) aufgebaut ist, wobei

   die Deckschichten (5, 6) und die Wände (8) der Kernschicht (7) aus Kunststoff oder einem Kunststoffverbund sind,
   **dadurch gekennzeichnet, dass**
   das Element in Sandwichbauweise um mindestens zwei Achsen (X, Y, Y', W, Z, Z') gebogen ist, und mindestens zwei dieser Achsen (X, Y, Y', W, Z, Z') sich in einem Schnittpunkt schneiden, und wobei die Deckschichten (5, 6) beide durchgängig und gebogen sind und die Deckschichten (5, 6) keine Naht und/oder Fuge aufweisen.

2. Bauteil nach Anspruch 1, bei dem mindestens zwei der Achsen (X, Y, Y', W, Z, Z'), um die das Element gebogen ist, nicht zueinander parallel sind.

3. Bauteil nach Anspruch 2, bei dem mindestens zwei der Achsen (X, Y, Y', W, Z, Z') nicht rechtwinklig zueinander stehen.

4. Bauteil nach Anspruch 1, bei dem der Schnittpunkt (S1, S2) der Achsen innerhalb des von den Außenrändern des Bauteils umgrenzten Bereichs liegt.

5. Bauteil nach einem der vorangehenden Ansprüche, aufweisend drei Achsen (X, Y, Z und X, Y', Z'), die nicht in einer gemeinsamen Raumebene verlaufen.

6. Bauteil nach einem der vorangehenden Ansprüche, aufweisend mindestens drei Flächen (2, 3, 3a, 10, 10'), die zueinander abgewinkelt sind, wobei die Winkel zwischen den Flächen ungleich 90° sind.

7. Bauteil nach einem der vorangehenden Ansprüche, bei dem die Deckschichten (5, 6) eine konstante Dicke aufweisen.

8. Bauteil nach einem der vorangehenden Ansprüche, wobei das Element in Sandwichbauweise eine Durchbiegung von maximal 1/300 bei einer Belastung von 5,75 kN/m2 aufweist.

9. Bauteil nach einem der vorangehenden Ansprüche, wobei das Element in Sandwichbauweise eine Durchbiegung von maximal 1/200 bei einer Belastung von 6,70 kN/m$^2$ aufweist.

10. Bauteil nach einem der vorangehenden Ansprüche, das ein Verkleidungsteil oder ein Strukturteil ist.

11. Bauteil nach einem der vorangehenden Ansprüche, das ein Fußbodenteil, eine Seitenwand, eine Wagendecke, eine Ablage oder eine Trennwand ist.

12. Bauteil nach einem der vorangehenden Ansprüche, das ein Fußbodenteil mit einer darin eingeformten Einstiegsrampe (2) ist.

**13.** Schienenfahrzeug, das ein Bauteil (1) aufweist, wie in einem der Ansprüche 1 - 12 beschrieben.


**Claims**

**1.** A component (1) for rail vehicles, comprising a sandwich-like element, which is constructed from two cover layers (5, 6) and a core layer (7) disposed between the cover layers and formed of walls (8) and cells (9) bounded thereby, wherein
the cover layers (5, 6) and the walls (8) of the core layer (7) are made of plastics material or a plastics material composite,
**characterised in that**
the sandwich-like element is bent about at least two axes (X, Y, Y', W, Z, Z'), and at least two of these axes (X, Y, Y', W, Z, Z') intersect one another at a point of intersection, and wherein the cover layers (5, 6) are both bent continuously and the cover layers (5, 6) do not have a seam and/or joint.

**2.** The component according to claim 1, in which at least two of the axes (X, Y, Y', W, Z, Z') about which the element is bent are not parallel to one another.

**3.** The component according to claim 2, in which at least two of the axes (X, Y, Y', W, Z, Z') are not at right angles to one another.

**4.** The component according to claim 1, in which the point of intersection (S1, S2) of the axes lies within the region bounded by the outer edges of the component.

**5.** The component according to any one of the preceding claims, comprising three axes (X, Y, Z and X, Y', Z'), which do not extend in a common spatial plane.

**6.** The component according to any one of the preceding claims, comprising at least three faces (2, 3, 3a, 10, 10'), which are angled relative to one another, wherein the angles between the faces are not equal to 90°.

**7.** The component according to any one of the preceding claims, wherein the cover layers (5, 6) have a constant thickness.

**8.** The component according to any one of the preceding claims, wherein the sandwich-like element has a deflection of at most 1/300 under a load of 5.75 kN/m2.

**9.** The component according to any one of the preceding claims, wherein the sandwich-like element has a deflection of at most 1/200 under a load of 6.70 $kN/m^2$.

**10.** The component according to any one of the preceding claims, which is a cladding part or a structural part.

**11.** The component according to any one of the preceding claims, which is a flooring part, a side wall, a car body ceiling, a shelf, or a partition wall.

**12.** The component according to any one of the preceding claims, which is a floor part with an access ramp (2) formed therein.

**13.** A rail vehicle which comprises a component (1) as described in any one of claims 1-12.


**Revendications**

**1.** Pièce structurale (1) pour véhicules ferroviaires, présentant un élément à structure sandwich, qui est composé de deux couches de couverture (5, 6) et d'une couche centrale (7) située entre les couches de couverture de parois (8) et de cellules (9) délimitées par celles-ci, dans laquelle
les couches de couverture (5, 6) et les parois (8) de la couche centrale (7) sont en plastique ou en un composite plastique,
**caractérisée en ce que**

l'élément à structure sandwich est recourbé autour d'au moins deux axes (X, Y, Y', W, Z, Z'), et au moins deux de ces axes (X, Y, Y', W, Z, Z') se coupent en un point d'intersection, et dans laquelle les couches de couverture (5, 6) sont toutes deux continues et recourbées et les couches de couverture (5, 6) ne présentent pas de cordon de soudure et/ou joint.

2.  Pièce structurale selon la revendication 1, dans laquelle au moins deux des axes (X, Y, Y', W, Z, Z'), autour desquels l'élément est recourbé, ne sont pas parallèles l'un à l'autre.

3.  Pièce structurale selon la revendication 2, dans laquelle au moins deux des axes (X, Y, Y', W, Z, Z') ne sont pas perpendiculaires l'un à l'autre.

4.  Pièce structurale selon la revendication 1, dans laquelle le point d'intersection (S1, S2) des axes se situe à l'intérieur de la zone délimitée par les bords extérieurs de la pièce structurale.

5.  Pièce structurale selon l'une quelconque des revendications précédentes, présentant trois axes (X, Y, Z et X, Y', Z'), qui ne s'étendent pas dans un plan spatial commun.

6.  Pièce structurale selon l'une quelconque des revendications précédentes, présentant au moins trois surfaces (2, 3, 3a, 10, 10'), qui forment un angle l'une par rapport à l'autre, dans laquelle les angles entre les surfaces sont différents de 90°.

7.  Pièce structurale selon l'une quelconque des revendications précédentes, dans laquelle les couches de couverture (5, 6) présentent une épaisseur constante.

8.  Pièce structurale selon l'une quelconque des revendications précédentes, dans laquelle l'élément à structure sandwich présente une déformation maximum de 1/300 pour une sollicitation de 5,75 kN/m2.

9.  Pièce structurale selon l'une quelconque des revendications précédentes, dans laquelle l'élément à structure sandwich présente une déformation maximum de 1/200 pour une sollicitation de 6,70 kN/m2.

10. Pièce structurale selon l'une quelconque des revendications précédentes, qui est un élément de revêtement ou un élément structurel.

11. Pièce structurale selon l'une quelconque des revendications précédentes, qui est un élément de plancher, une paroi latérale, un plafond de wagon, un dépôt ou une cloison.

12. Pièce structurale selon l'une quelconque des revendications précédentes, qui est un élément de plancher avec une rampe d'accès (2) moulée dans celui-ci.

13. Véhicule ferroviaire, qui présente une pièce structurale (1), telle que décrite dans l'une quelconque des revendications 1 - 12.

Fig. 1

Fig.2

Fig.3

Fig. 4

EP 2 681 095 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0354436 A
- EP 0405889 A
- EP 0544498 A
- EP 2266784 A
- DE 19843969 A1
- FR 2866623 A1
- GB 2159105 A
- DE 10042560 A1
- US 20060240242 A